# EUROPEAN PATENT APPLICATION

(11) **EP 1 303 092 A2**
(43) Date of publication of application: **16.04.2003**
(21) Application number: 02019906.3
(22) Date of filing: 04.09.2002
(51) Int. Cl.: H04L 25/03

(54) **Selective tap initialization in a multicarrier equaliser**

(30) Priority: 19.09.2001 US 955651
(71) Applicant: Thomson Licensing S.A., 92100 Boulogne Billancourt (FR)
(72) Inventor: Belotserkovsky, Maxim B., 92648 Boulogne Billancourt Cedex (FR); Litwin, Louis Robert, Jr., 92648 Boulogne Billancourt Cedex (FR)
(74) Representative: Kohrs, Martin

(57) **Abstract**

A method for initializing an equalizer in an Orthogonal Frequency Division Multiplexing ("OFDM") receiver includes inhibiting, based at least in part on (a) an equalizer tap being less than a first limit (240) and (b) a time between OFDM signals being less than a second limit (270), an initialization of the tap. In an alternative embodiment, a method includes initializing (260) equalizer taps upon startup, re-initializing (320) the taps upon a passage of a predetermined time between OFDM signals, and selectively re-initializing (300, 340) at least one tap upon divergence of the tap. In another alternative embodiment, an apparatus includes an equalizer (72) and a tap initialization controller (108) coupled thereto. The tap initialization controller (108) is configured to inhibit, based at least in part on (a) a tap being less than a first limit (240) and (b) a time between OFDM signals being less than a second limit (270), an initialization of the tap.

## Description

### FIELD OF THE INVENTION

The present invention relates to processing orthogonal frequency division multiplexed ("OFDM") signals.

### BACKGROUND OF THE INVENTION

A local area network ("LAN") may be wired or wireless. A wireless local area network ("wireless LAN" or "WLAN") is a flexible data communications system implemented as an extension to, or as an alternative for, a wired local area network ("wired LAN") within a building or campus. Using electromagnetic waves, WLANs transmit and receive data over the air, minimizing the need for wired connections. Thus, WLANs combine data connectivity with user mobility, and, through simplified configuration, enable movable LANs. Some industries that have benefited from the productivity gains of using portable terminals (e.g., notebook computers) to transmit and receive real-time information are the digital home networking, health-care, retail, manufacturing, and warehousing industries.

Manufacturers of WLANs have a range of transmission technologies to choose from when designing a WLAN. Some exemplary technologies are multicarrier systems, spread spectrum systems, narrowband systems, and infrared systems. Although each system has its own benefits and detriments, one particular type of multicarrier transmission system, orthogonal frequency division multiplexing ("OFDM"), has proven to be exceptionally useful for WLAN communications.

OFDM is a robust technique for efficiently transmitting data over a channel. The technique uses a plurality of subcarrier frequencies ("subcarriers") within a channel bandwidth to transmit data. These subcarriers are arranged for optimal bandwidth efficiency as compared to conventional frequency division multiplexing ("FDM"), which can waste portions of the channel bandwidth in order to separate and isolate the subcarrier frequency spectra and thereby avoid inter-carrier interference ("ICI"). By contrast, although the frequency spectra of OFDM subcarriers overlap significantly within the OFDM channel bandwidth, OFDM nonetheless allows resolution and recovery of the information that has been modulated onto each subcarrier. In addition to the more efficient spectrum usage, OFDM provides several other advantages, including a tolerance to multi-path delay spread and frequency selective fading, good interference properties, and relatively simplified frequency-domain processing of the received signals.

For processing, an OFDM receiver typically converts a received signal from the time-domain into frequency-domain representations of the signal. Generally, conventional OFDM receivers accomplish this by sampling the time-domain signal and then applying Fast Fourier Transforms ("FFTs") to blocks of the samples. The resulting frequency-domain data generally includes a complex value (e.g., magnitude component and phase component, or real component and imaginary component) for each respective subcarrier. The receiver typically applies an equalizer to the frequency-domain data before recovering the baseband data that was modulated onto each subcarrier. Primarily, the equalizer corrects for multi-path distortion effects of the channel through which the OFDM signal was transmitted. Some receivers may also use the equalizer to correct for other problems encountered with OFDM communications, such as, for example, carrier frequency offset (i.e., a difference between the transmitter and receiver frequencies), and/or sampling frequency offset (i.e., a difference between the transmitter and receiver sampling clock frequencies). Carrier frequency offset and sampling frequency offset can result in a loss of orthogonality between the subcarriers, which results in inter-carrier interference ("ICI") and a severe increase in the bit error rate ("BER") of the data recovered by the receiver. In any event, the equalizer of the OFDM receiver typically has one or more taps which receive a tap setting corresponding to the complex correction (e.g., real correction and imaginary correction, or magnitude correction and phase correction) for each subcarrier.

Historically, initialization of the equalizer taps has been a noisy process. Conventional OFDM receivers typically initialize the equalizer taps with (X/Y), which represents a division of a predetermined, stored frequency-domain representation of an expected OFDM signal (i.e., a "training symbol" or "X") by the frequency-domain representation of the corresponding actual received signal ("Y"). The taps are typically initialized based on just one or maybe an average of two training symbols, and they are re-initialized upon receipt of each new packet of data. Such initialization schemes are based on a simplified frequency-domain model for a relatively noise free channel that assumes orthogonality among the subcarriers, in which Y=C∗X, where a received signal (Y) is merely a transmitted signal (X) times the channel response (C). In such a case, C=Y/X and thus, to compensate for the channel response, the equalizer is initialized with 1/C, or X/Y. However, in actuality, Y=C∗X + N, where N is the channel noise. The small number of symbols used for the conventional initialization schemes does not average out the effects of this channel noise. It is typically not until well after an initialization (when the taps have been adapted using several data symbols from the same packet) before a tap update algorithm has smoothed out the effects of the noise. The conventional practice of re-initializing the taps upon receipt of each new data packet undesirably repeatedly re-introduces the effects of the channel noise. The present invention is directed to the correction of this problem.

### SUMMARY OF THE INVENTION

A method for initializing an equalizer in an Orthogonal Frequency Division Multiplexing ("OFDM") receiver includes inhibiting, based at least in part on (a) an equalizer tap being less than a first limit and (b) a time between OFDM signals being less than a second limit, an initialization of the tap. In an alternative embodiment, a method includes initializing equalizer taps upon startup, re-initializing the taps upon a passage of a predetermined time between OFDM signals, and selectively re-initializing at least one tap upon divergence of the tap. In another alternative embodiment, an apparatus includes an equalizer and a tap initialization controller coupled thereto. The tap initialization controller is configured to inhibit, based at least in part on (a) a tap being less than a first limit and (b) a time between OFDM signals being less than a second limit, an initialization of the tap.

### BRIEF DESCRIPTION OF THE DRAWINGS

The aforementioned advantages of the invention, as well as additional advantages thereof, will be more fully understood as a result of a detailed description of the preferred embodiment when taken in conjunction with the accompanying drawings in which:
FIG. 1 is a block diagram of an OFDM receiver according to the present invention;
FIG. 2 is a block diagram of the adaptive equalizer of FIG. 1;
FIG. 3 is a flowchart for a method of initializing equalizer taps according to the present invention;
FIG. 4 is an illustration of a startup mode according to the present invention;
FIG. 5 is an illustration of a wholesale re-initialization mode according to the present invention; and
FIG. 6 is an illustration of a selective re-initialization mode according to the present invention.

### DETAILED DESCRIPTION OF THE PREFERRED EMBODIMENT

The characteristics and advantages of the present invention will become more apparent from the following description, given by way of example.

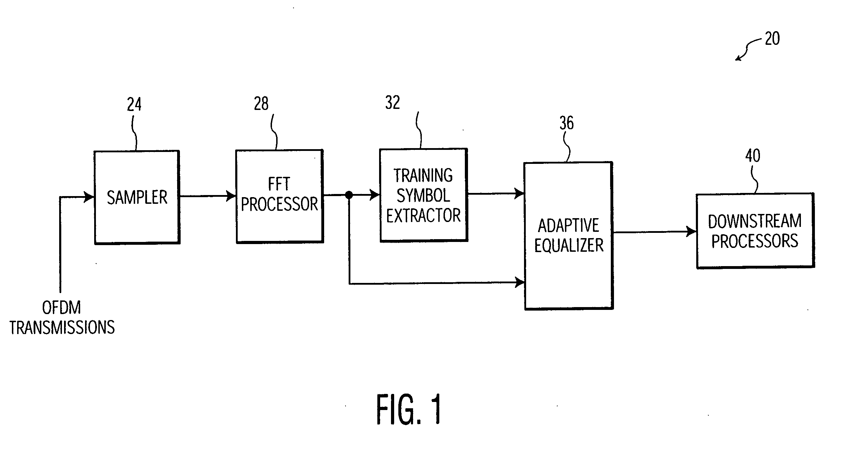

Referring to FIG. 1, a block diagram of an OFDM receiver 20 according to the present invention is shown. OFDM receiver 20 includes a sampler 24, an FFT processor 28, a training symbol extractor 32, an adaptive equalizer 36, and downstream processors 40. In general, OFDM receiver 20 is configured to receive OFDM transmissions and recover baseband data therefrom. The received transmissions may conform to the proposed ETSI-BRAN HIPERLAN/2 (Europe) and/or the IEEE 802.11a (USA) wireless LAN standards, which are herein incorporated by reference, or they may conform to any other suitable protocols or standard formats for burst communications systems (where each new data packet starts with a preamble that includes a training symbol). It should be noted that OFDM receiver 20 may be embodied in hardware, software, or any suitable combination thereof. Additionally, OFDM receiver 20 may be integrated into other hardware and/or software. For example, OFDM receiver 20 may be part of a WLAN adapter that is implemented as a PC card for a notebook or palmtop computer, as a card in a desktop computer, or integrated within a hand-held computer. Further, it should be readily appreciated that various components of OFDM receiver 20 may suitably be interconnected by various control inputs and outputs (not shown) for the communication of various control settings. For example, FFT processor 28 may include a suitable input for receiving window synchronization settings.

Sampler 24 is configured to receive transmitted OFDM signals and generate time-domain samples or data therefrom. To this end, sampler 24 includes suitable input signal conditioning and an analog-to-digital converter ("ADC").

FFT processor 28 is coupled to sampler 24 to receive time-domain data therefrom. FFT processor 28 is configured generate frequency-domain representations or data from the time-domain data by performing FFT operations on blocks of the time-domain data.

Training symbol extractor 32 is coupled to FFT processor 28 to receive frequency-domain data therefrom. Training symbol extractor 32 is configured to extract training symbols from training sequences that have been included in the transmitted OFDM signals. A training sequence contains predetermined transmission values for all of the subcarriers of the OFDM carrier. Here, it should be noted that for clarity of exposition, at times the description of the present invention may be presented from the point of view of a single subcarrier. In this context, a "training symbol" may be viewed as the predetermined frequency-domain value for a particular subcarrier. Nevertheless, it should be readily appreciated that the present invention may be used to sequentially process data for a plurality of subcarriers, and/or various components of the present invention may be suitably replicated and coupled to parallel process data for a plurality of subcarriers.

Adaptive equalizer 36 is coupled to training symbol extractor 32 to receive training symbols therefrom and is coupled to FFT processor 28 to receive frequency-domain data therefrom. In general, adaptive equalizer 36 is configured to reduce the multi-path distortion effects of the channel through which the OFDM signals have been transmitted. The configuration and operation of adaptive equalizer 36 is discussed in further detail below.

Downstream processors 40 are coupled to adaptive equalizer 36 to receive equalized frequency-domain data therefrom. Downstream processors 40 are configured to recover baseband data that was included in the transmitted OFDM signals.

In operation of the OFDM receiver 20, sampler 24 receives OFDM signals and generates time-domain data therefrom. FFT processor 28 generates frequency-domain data from the time-domain data by performing FFT operations on blocks of the time-domain data, and training symbol extractor 32 extracts training symbols from training sequences that have been included in the OFDM signals. Generally, adaptive equalizer 36 reduces multi-path distortion effects of the OFDM transmission channel. The operation of adaptive equalizer 36 is discussed in further detail below. Downstream processors 40 recover baseband data that was included in the transmitted OFDM signals.

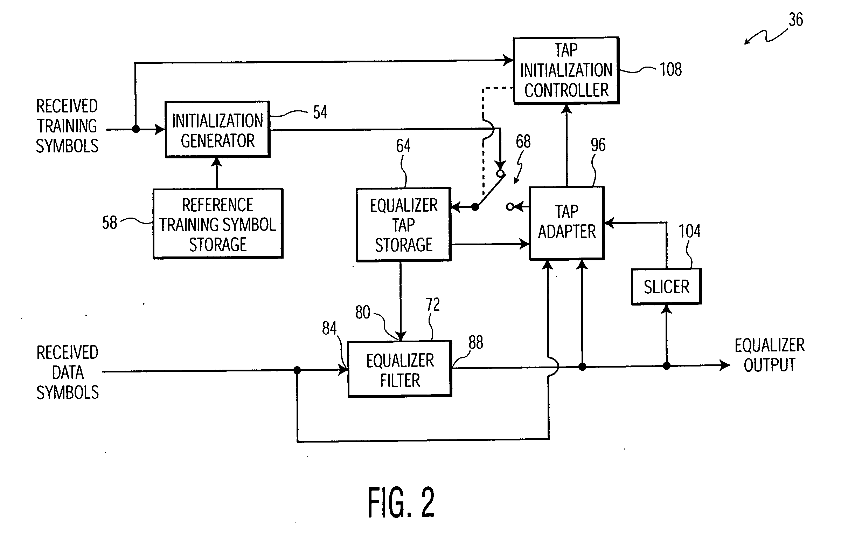

Referring now to FIG. 2, a block diagram of adaptive equalizer 36 of FIG. 1 is shown. Adaptive equalizer 36 includes initialization generator 54, reference training symbol storage 58, equalizer tap storage 64, switch 68, equalizer filter 72, tap adapter 96, slicer 104, and tap initialization controller 108. As noted above, OFDM receiver 20 (FIG. 1) may be embodied in hardware, software, or any suitable combination thereof. Accordingly, it should be readily appreciated that adaptive equalizer 36 may be embodied in hardware, software, or any suitable combination thereof. In general, adaptive equalizer 36 is configured to generate an initial equalizer tap setting based on a training symbol and an adaptive algorithm, and to generate subsequent tap settings based on data symbols and an adaptive algorithm.

Initialization generator 54 is coupled to training symbol extractor 32 (FIG. 1) to receive training symbols therefrom and is coupled to reference training symbol storage 58 to receive a predetermined reference training symbol therefrom. Initialization generator 54 is configured to generate an initial tap setting based on a received training symbol and the reference training symbol.

Reference training symbol storage 58 is coupled to initialization generator 54 to provide the reference training symbol thereto. Reference training symbol storage 58 is configured to store the reference training symbol (real part and imaginary part, or magnitude and phase).

Equalizer tap storage 64 is coupled to switch 68 to selectively receive either the initial tap setting from initialization generator 54 or a updated tap setting from tap adapter 96. Further, equalizer tap storage 64 is coupled to tap adapter 96 to provide an old tap setting thereto. Also, equalizer tap storage 64 is coupled to equalizer filter 72 to provide the latest tap setting thereto. Equalizer tap storage 64 is configured to store a tap setting (real part and imaginary part, or magnitude and phase).

Equalizer filter 72 includes a first input port 80, a second input port 84, and an output port 88. Input port 80 is coupled to equalizer tap storage 64 to receive the latest tap setting therefrom. Input port 84 is coupled to FFT processor 28 (FIG. 1) to receive data symbols therefrom. Equalizer filter 72 is configured to generate an equalizer output at output port 88 that represents a frequency-domain multiplication of the data received through its two input ports.

Tap adapter 96 is coupled to output port 88 of equalizer filter 72 to receive the equalizer output therefrom. Further, tap adapter 96 is coupled to input port 84 of equalizer filter 72 and FFT processor 28 (FIG. 1) to receive data symbols therefrom. Tap adapter 96 is also coupled to slicer 104 to receive a slicer output therefrom. Slicer 104 is discussed in further detail below. Also, tap adapter 96 is coupled to switch 68 to selectively provide the latest tap setting to equalizer tap storage 64. Additionally, as noted above, tap adapter 96 is coupled to equalizer tap storage 64 to receive an old tap setting therefrom, and tap adapter 96 is also coupled to slicer 104. In general, tap adapter 96 is configured to generate tap settings based on a least-mean-squares ("LMS") on any other suitable adaptive algorithm. Further, tap adapter 96 is coupled to tap initialization controller 108 to provide the error from the adaptive algorithm thereto.

Slicer 104 is coupled to output port 88 of equalizer filter 72 to receive the equalizer output therefrom. Further, slicer 104 is coupled to tap adapter 96 to provide the slicer output thereto. Slicer 104 is configured to generate the slicer output based on a decision as to which of a plurality of predetermined possible data values is closest to the actual equalizer output.

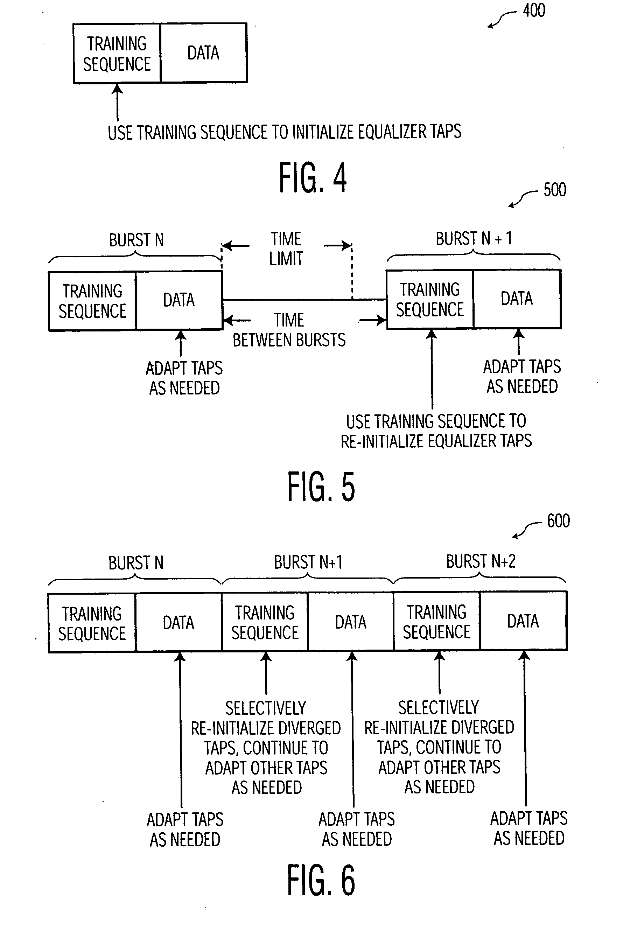

Tap initialization controller 108 is coupled to tap adapter 96 to receive the error therefrom. Further, tap initialization controller 108 is coupled to training symbol extractor 32 (FIG. 1) to receive training symbols therefrom. Also, tap initialization controller 108 is coupled to switch 68 (indicated by the dashed lines) to selectively control the operation of switch 68. Tap initialization controller 108 is configured to cause the present invention to switch between various operational modes as is discussed in further detail below (see FIG. 4, FIG. 5, and FIG. 6).

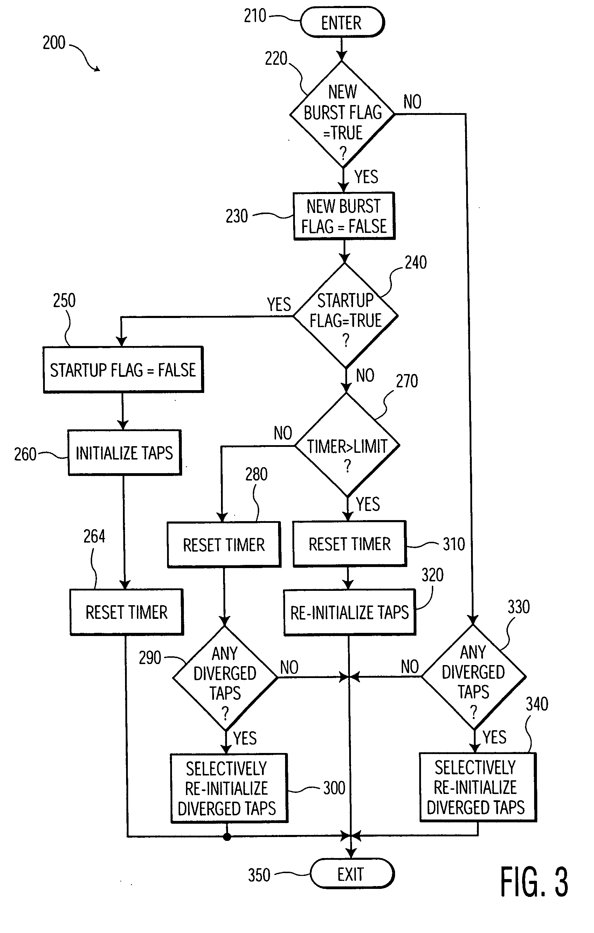

In operation, adaptive equalizer 36 executes the methods and modes discussed below in connection with FIG. 3, FIG. 4, FIG. 5, and FIG. 6.

Referring now to FIG. 3, a flowchart for a method 200 of initializing equalizer taps according to the present invention is shown. It should be noted that method 200 is generally directed to a burst communications system (where each new data packet starts with a preamble that includes a training symbol). To this end, it should be appreciated that method 200 assumes that sampler 24 or some other suitable component of OFDM receiver 20 (FIG. 1) automatically sets (i.e., makes "TRUE" or logical 1) a NEW BURST flag upon receipt of a new transmission or "burst." Additionally, it should be appreciated that method 200 assumes that sampler 24 or some other suitable component of OFDM receiver 20 (FIG. 1) maintains a timer that can be accessed by tap initialization controller 108 (FIG. 2).

At step 210, tap initialization controller 108 enters method 200. This entry into method 200 is triggered by a real-time interrupt, a suitably recurring subroutine call, or any suitable arrangement of hardware and/or software that causes tap initialization controller 108 to repeat method 200 at suitable intervals. From step 210, tap initialization controller 108 proceeds to step 220.

At step 220, tap initialization controller 108 determines whether NEW BURST flag is TRUE. If so, then OFDM receiver 20 (FIG. 1) has received a new transmission. Accordingly, if NEW BURST flag is TRUE then tap initialization controller 108 proceeds to step 230; else, tap initialization controller 108 proceeds to step 330 (below).

At step 230, tap initialization controller 108 clears NEW BURST flag (i.e., makes the new burst flag "FALSE" or logical "0"). It should be readily appreciated that clearing the new burst flag at this point prevents tap initialization controller 108 from repeating this branch of method 200 until after another new transmission has been received. From step 230, tap initialization controller 108 proceeds to step 240.

At step 240, tap initialization controller 108 determines whether a STARTUP flag is TRUE. If so, then the latest received transmission is the first transmission received since OFDM receiver 20 has been powered up or otherwise reset (of course, this assumes that STARTUP flag has been made TRUE by power-up and/or reset processes of OFDM receiver 20). Accordingly, if STARTUP flag is TRUE then tap initialization controller 108 proceeds to step 250, step 260, step 264, and step 350 where tap initialization controller 108 clears STARTUP flag, initializes all of the equalizer taps by coupling (via switch 68) initialization generator 54 to equalizer tap storage 64 for each equalizer tap, resets a TIMER that measures a time between reception of the latest two transmissions, and exits method 200, respectively. On the other hand, if STARTUP flag is FALSE then tap initialization controller 108 proceeds to step 270.

At step 270, tap initialization controller 108 determines whether the TIMER that measures the time between reception of the latest two transmissions exceeds a predetermined limit. If so, then it is presumed that the channel has probably changed enough to require re-initialization of all of the equalizer taps. Accordingly, if the TIMER exceeds the limit then initialization controller 108 proceeds to step 310, step 320, and step 350, where tap initialization controller 108 resets or clears the TIMER, re-initializes all of the equalizer taps, and exits method 200, respectively. On the other hand, if the TIMER does not exceed the limit then tap initialization controller 108 proceeds to step 280.

At step 280, tap initialization controller 108 resets the TIMER. Here, it should be appreciated that since the tap initialization controller 108 has determined that a new transmission has been received (see step 220, above) within the predetermined time limit (see step 270, above), tap initialization controller 108 resets the TIMER so that a new time interval can be measured between the present transmission and the next transmission. From step 280, tap initialization controller 108 proceeds to step 290.

At step 290, tap initialization controller 108 determines whether any of the equalizer tap settings for the respective subcarriers has diverged by comparing the respective error received from tap adapter 96 to a predetermined limit. It should be noted that in alternative embodiments, tap initialization controller 108 may suitably compare the actual tap setting values to suitable predetermined limits rather than or in addition to determining divergence based on the error from the adaptive algorithm. In any event, if any of the taps has diverged, then tap initialization controller 108 proceeds to step 300; else, tap initialization controller 108 exits method 200 at step 350.

At step 300, tap initialization controller 108 selectively re-initializes the equalizer taps (i.e., re-initializes only those equalizer taps that have diverged). It should be appreciated that selectively re-initializing the taps avoids undesirable re-introduction of the channel noise into the taps settings that have not diverged and have been refined from their initial values by adapting based on received data. From step 300, tap initialization controller 108 proceeds to exit method 200 at step 350.

As discussed above, if it is determined, at step 220, that the NEW BURST flag is not true then tap initialization controller 108 proceeds to step 330. At step 330, tap initialization controller 108 determines whether any of the equalizer tap settings for the respective subcarriers has diverged by comparing the respective error received from tap adapter 96 to a predetermined limit. It should be noted that in alternative embodiments, tap initialization controller 108 may suitably compare the actual tap setting values to suitable predetermined limits rather than or in addition to determining divergence based on the error from the adaptive algorithm. In any event, if any of the taps has diverged, then tap initialization controller 108 proceeds to step 340; else, tap initialization controller 108 exits method 200 at step 350.

At step 340, tap initialization controller 108 selectively re-initializes the equalizer taps (i.e., re-initializes only those equalizer taps that have diverged). It should be appreciated that selectively re-initializing the taps avoids undesirable reintroduction of the channel noise into the taps settings that have not diverged and have been refined from their initial values by adapting based on received data. From step 340, tap initialization controller 108 proceeds to exit method 200 at step 350.

Referring now to FIG. 4, an illustration of a startup mode 400 according to the present invention is shown. Upon the first transmission received after startup (i.e., power-up, reboot, or the like), tap initialization controller 108 puts switch 68 in the state shown in FIG. 2 and thereby couples initialization generator 54 to equalizer tap storage 64 through switch 68. Initialization generator 54 receives training symbols from the first transmission (via training symbol extractor 32) and generates initial equalizer tap settings for all subcarriers based on these training symbols. The initial tap settings are stored in equalizer tap storage 64 and received by equalizer filter 72 via input port 80.

Referring now to FIG. 5, an illustration of a wholesale re-initialization mode 500 according to the present invention is shown. As OFDM receiver 20 receives data from a first transmission (indicated in FIG. 5 as "Burst N"), tap initialization controller 108 holds switch 68 in its alternate state from that shown in FIG. 2, thereby allowing tap adapter 96 to update the equalizer tap settings based on the received data and the adaptive algorithm.

But, if a time greater than the predetermined time limit passes before a second transmission (indicated as "Burst N+1" in FIG. 5) arrives, then tap initialization controller 108 puts switch 68 in the state shown in FIG. 2 and thereby couples initialization generator 54 to equalizer tap storage 64 through switch 68. Meanwhile, initialization generator 54 receives training symbols from the second transmission (via training symbol extractor 32) and generates new initial equalizer tap settings for all subcarriers based on these training symbols. The new initial tap settings are stored in equalizer tap storage 64 and received by equalizer filter 72 via input port 80. After this re-initialization of the taps, tap initialization controller 108 puts switch 68 back into its alternate state from that shown in FIG. 2, thereby allowing tap adapter 96 to update the equalizer tap settings based on the data from the second transmission and the adaptive algorithm.

Referring now to FIG. 6, an illustration of a selective re-initialization mode 600 according to the present invention is shown. As OFDM receiver 20 receives data from a first transmission (indicated in FIG. 6 as "Burst N"), tap initialization controller 108 holds switch 68 in its alternate state from that shown in FIG. 2, thereby allowing tap adapter 96 to update the equalizer tap settings based on the received data and the adaptive algorithm.

Next, if a time greater than the predetermined time limit does not pass before a second transmission (indicated as "Burst N+1" in FIG. 5) arrives, then tap initialization controller 108 leaves switch 68 in its alternate state from that shown in FIG. 2 for all subcarriers except those whose tap settings have diverged. Where one or more tap settings have diverged, tap initialization controller 108 puts switch 68 in the state shown in FIG. 2 for re-initializing the diverged tap settings (and leaves switch 68 in its alternate state for the subcarriers whose tap settings have not diverged). Meanwhile, initialization generator 54 receives training symbols from the second transmission (via training symbol extractor 32) and generates a new initial equalizer tap setting (based on the respective training symbol) to replace each diverged tap setting. The new initial tap settings are stored in equalizer tap storage 64 and received by equalizer filter 72 via input port 80. After this selective re-initialization of the diverged taps, tap initialization controller 108 puts switch 68 back into its alternate state from that shown in FIG. 2 (for all subcarriers), thereby allowing tap adapter 96 to update the equalizer tap settings based on the data from the second transmission and the adaptive algorithm. Here, it should be noted that tap adapter 96 continues to adapt the settings of those taps that are not selectively re-initialized (based on the data received on the respective subcarriers).

In general, tap initialization controller 108 maintains the selective re-initialization mode as long as the time between the end and the beginning of successive transmissions does not exceed the predetermined limit. If the time exceeds the limit, then tap initialization controller 108 initiates wholesale re-initialization mode 500 (FIG. 5). Here, it should also be noted that although FIG. 6 shows back-to-back transmissions (where the time between the transmissions is practically zero) tap initialization controller 108 considers any time between successive transmissions that does not exceed the limit to qualify for selective re-initialization mode 600. For example, when the predetermined time limit is 2 seconds, then tap initialization controller 108 responds to a time of 1.9 seconds between the end of one transmission and the beginning of the next in a like manner as its response to a time of 0.1 seconds (in both cases, tap initialization controller 108 causes OFDM receiver 20 to operate according to selective re-initialization mode 600).

Thus according to the principle of the present invention, an OFDM receiver inhibits, based at least in part on (a) an equalizer tap being less than a first limit and (b) a time between OFDM signals being less than a second limit, an initialization of the tap.

While the present invention has been described with reference to the preferred embodiments, it is apparent that that various changes may be made in the embodiments without departing from the spirit and the scope of the invention, as defined by the appended claims.

## Claims

1. A method for initializing an equalizer in an Orthogonal Frequency Division Multiplexing ("OFDM") receiver, the method **characterized by** the step of:
inhibiting, based at least in part on (a) a first tap of an equalizer being less than a first limit (240) and (b) a time between a first OFDM signal and a second OFDM signal being less than a second limit (270), an initialization of the first tap.

2. The method of claim 1, further **characterized by** the step of:
enabling (200, 340) an adaptation of the first tap.

3. The method of claim 2, further **characterized by** the step of:
enabling, based at least in part on a second tap of the equalizer being equal to or greater than a third limit (240), an initialization of the second tap;
wherein the step of enabling the initialization of the second tap is contemporaneous with the step of enabling the adaptation of the first tap.

4. The method of claim 3, further **characterized by** the step of:
initializing (260) the second tap;
wherein the step of initializing (260) the second tap includes initializing the second tap based on a training portion of the first OFDM signal.

5. The method of claim 4, further **characterized by** the step of:
adapting (300, 340) the first tap;
wherein the step of adapting (300, 340) the first tap includes adapting the first tap based on a data portion of the first OFDM signal.

6. The method of claim 5, **characterized in that** the first limit (240) and the third limit (240) are the same.

7. The method of claim 6, further **characterized by** the step of:
receiving at least one of the first OFDM signal and the second OFDM signal over a wireless local area network.

8. The method of claim 6, further **characterized by** the step of:
receiving at least one of the first OFDM signal and the second OFDM signal into at least one of a portable computer and a desktop computer.

9. A method for initializing an equalizer in an Orthogonal Frequency Division Multiplexing ("OFDM") receiver, the method **characterized by** the steps of:
initializing (260) a plurality of taps of the equalizer upon startup;
re-initializing (320) the plurality of taps upon a passage of a predetermined time (270) between an OFDM signal and a subsequent OFDM signal; and
selectively re-initializing (300, 340) at least one of the taps upon a divergence of the tap.

10. The method of claim 9, **characterized in that**:
the step of initializing (260) includes initializing the plurality of taps based on a training portion of a startup OFDM signal,
the step of re-initializing (320) includes re-initializing the plurality of taps based on a training portion of the subsequent OFDM signal, and
the step of selectively re-initializing (300, 340) includes selectively re-initializing the at least one of the taps based on a training portion of the OFDM signal.

11. The method of claim 10, **characterized in that** any one of the steps includes receiving the respective training portion over a wireless local area network.

12. The method of claim 10, **characterized in that** any one of the steps includes receiving the respective training portion into at least one of a portable computer and a desktop computer.

13. An apparatus for initializing equalization operations in an Orthogonal Frequency Division Multiplexing ("OFDM") receiver, the apparatus **characterized by**:
an equalizer (72) including at least one tap;
a tap initialization controller (108) coupled to the equalizer (72) to set the at least one tap, the tap initialization controller (108) being configured to inhibit, based at least in part on (a) a first tap of the equalizer (72) being less than a first limit and (b) a time between a first OFDM signal and a second OFDM signal being less than a second limit, an initialization of the first tap.

14. The apparatus of claim 13, **characterized in that** the tap initialization controller (108) is further configured to enable an adaptation of the first tap.

15. The apparatus of claim 14, **characterized in that** the tap initialization controller (108) is further configured to enable, based at least in part on a second tap of the equalizer (72) being equal to or greater than a third limit, an initialization of the second tap while the tap initialization controller (108) contemporaneously enables the adaptation of the first tap.

16. The apparatus of claim 15, **characterized in that** the tap initialization controller (108) is further configured to initialize the second tap and is further configured to initialize the second tap based on a training portion of the first OFDM signal.

17. The apparatus of claim 16, **characterized in that** the tap initialization controller (108) is further configured to adapt the first tap and is further configured to adapt the first tap based on a data portion of the first OFDM signal.

18. The apparatus of claim 17, **characterized in that** the first limit and the third limit are the same.

19. The apparatus of claim 18, further **characterized by**:
a wireless local area network receiver coupled to the tap initialization controller (108) to provide at least one of the first OFDM signal and the second OFDM signal thereto.

20. The apparatus of claim 18, **characterized in that** the tap initialization controller (108) is installed in at least one of a portable computer and a desktop computer.
